# FASCICULE DE BREVET EUROPEEN

(11) **EP 0 789 005 B1**
(45) Date de publication et mention de la délivrance du brevet: **05.04.2000**
(21) Numéro de dépôt: 97400261.0
(22) Date de dépôt: 06.02.1997
(51) Int. Cl.: C03C 17/36

(54) **Substrat transparent muni d'un empilement de couches minces à propriétés dans l'infrarouge**
Durchsichtiges Substrat mit einem Dünnschichtaufbau mit Eigenschaften im Infrarotgebiet
Transparent substrate with a stack of thin layers with properties in the infrared region

(30) Priorité: 09.02.1996 DE 19604699
(43) Date de publication de la demande: 13.08.1997
(73) Titulaire: SAINT-GOBAIN VITRAGE, 92400 Courbevoie (FR)
(72) Inventeur: Schicht, Heinz, 06925 Bethau (DE); Häussler, Wulf, 52477 Alsdorf (DE); Schindler, Herbert, 04860 Torgau (DE); Ditzel, Gerhard, 04860 Welsau (DE); Schmidt, Uwe, 04895 Falkenberg/Elster (DE); Kaiser, Wilfried, 04860 Torgau (DE)
(74) Mandataire: Renous Chan, Véronique

(56) Documents cités:
- EP-A- 0 543 077
- WO-A-90/11975
- DD-A- 288 822
- DATABASE WPI Section Ch, Week 9606 Derwent Publications Ltd., London, GB; Class L01, AN 96-055755 XP002030862 & JP 07 315 874 A (NIPPON SHEET GLASS CO LTD) , 5 Décembre 1995

## Description

La présente invention concerne un substrat transparent, notamment un substrat verrier, muni d'un empilement de couches minces comportant au moins une couche métallique à propriétés dans l'infrarouge, notamment bas-émissive, disposée entre deux revêtements comportant chacun au moins une couche anti-reflets à base de matériau diélectrique, et au moins une couche protectrice à base d'un métal sacrificiel ou d'un métal sacrificiel partiellement ou totalement oxydé ou d'un alliage de métal sacrificiel placée entre ladite couche métallique et un desdits revêtements. Selon l'invention la couche placée directement en dessous et/ou au-dessus de ladite couche métallique contient au moins l'un des métaux nobles Pd, Au, Ir, Pt et Rh.

Les empilements de couches minces avec cette structure sont décrits dans de nombreuses formes de réalisation. Ils sont déposés à échelle industrielle, habituellement dans des dispositifs en continu, sur des feuilles polymères ou des plaques en verre, par le procédé de pulvérisation cathodique assisté par un champ magnétique. Les couches antireflets diélectriques consistent principalement en des couches d'oxydes métalliques, qui sont pulvérisées à partir d'une cible métallique réagissant dans un gaz de travail contenant de l'oxygène. La couche protectrice placée entre la couche en argent et la couche antireflet de couverture a donc pour objet, d'une part, de protéger la couche en argent située en dessous, au cours de la pulvérisation réactive de la couche antireflets de couverture, de l'effet oxydant de l'oxygène (EP 0 104 870 B1, DD 288 822), mais également, d'autre part, d'améliorer la stabilité à long terme de l'émpilement de couches minces vis-à-vis des agressions atmosphériques (pollution...).

On connait ainsi du document EP-0-433 136 B1 un vitrage pour automobile chauffant feuilleté comportant un verre recouvert d'une multicouche qui joue le rôle de résistance chauffante, et qui comprend une couche conductrice en argent et une couche protectrice en oxyde de zinc qui diminue la reflexion et, en plus, sur cettte couche protectrice, une couche mince en nickel-chrome ou tantale ou en oxyde de ces métaux qui améliore la stabilité de la multicouche et de surcroît améliore l'adhérence de la multicouche qui équipe le verre avec l'intercalaire thermoplastique.

On sait également que pour encore améliorer la stabilité à long terme de tels empilements de couches minces vis-à-vis des agressions atmosphériques, de même que le comportement de durabilité-corrosion de la couche, ainsi que la stabilité vis-à-vis des températures élevées, on dépose également, en dessous de la couche en argent, une couche protectrice en un métal sacrificiel ou un alliage de métal sacrificiel (DE 4 109 708 C1).

Comme métaux sacrificiels pour les couches protectrices non seulement au-dessus, mais aussi en dessous de la couche en argent, on trouve fondamentalement les métaux ou alliages métalliques ayant une affinité relativement élevée pour l'oxygène, et qui se lient à l'oxygène ayant diffusé dans ces couches protectrices avec formation des oxydes métalliques correspondants. Parce que les couches protectrices à l'état métallique diminuent la transmission de l'empilement de couches minces, ces couches protectrices sont déposées, de préférence, en une épaisseur telle qu'elles sont oxydées plus ou moins complètement lors de la pulvérisation réactive suivante de la couche antireflet et/ou lors d'un traitement thermique ultérieur. Leur effet protecteur concernant le comportement de durabilité-corrosion de l'empilement de couches minces est également obtenu dans leur forme au moins partiellement oxydée.

Le document DD 288 822 décrit la pulvérisation d'une couche protectrice métallique placée au-dessus de la couche en argent, à partir d'une cible d'alliage TiPd, où la quantité de Pd de l'alliage doit atteindre 0,1 à 1,0%. Par une telle couche protectrice en alliage, on augmente la résistance vis-à-vis de l'humidité et de la température et aussi, la stabilité à long terme de l'empilement de couches minces.

De même, il est connu que pour augmenter la stabilité d'un tel empilement de couches minces vis-à-vis de l'humidité et vis-à-vis d'une attaque chimique, on protège la couche en argent sur une ou sur deux de ses faces par un agent bloquant spécial, qui est constitué d'une double couche avec une première couche partielle en Pt et/ou Pd et une deuxième couche partielle en Ti et/ou Cr ou en une seule couche en un alliage avec au moins 15% en atomes de l'un de ces éléments. Dans le cas où l'agent bloquant est constitué de deux couches séparées, il faut utiliser pour sa préparation, des cibles de Pt pur et/ou de Pd pur, ce qui entraîne des coûts importants. Les couches partielles de Pt et/ou Pd pur ont, en outre, pour effet d'abaisser la transmission de l'empilement de couches minces. L'effet favorable de ces empilements de couches minces connus concernant la stabilité chimique repose sur la présence de la couche de métal noble sur la couche en argent, grâce à quoi celle-ci est protégée contre les agressions extérieures.

L'invention a pour objet d'augmenter la stabilité des empilements de couches minces de la structure citée précédemment, vis-à-vis de l'humidité et vis-à-vis des attaques chimiques, sans que cette amélioration ne soit trop pénalisante en termes de coût.

Suivant l'invention, l'objet est résolu en ce que la couche placée directement en dessous de la couche métallique à propriétés dans l'infrarouge contient au moins l'un des métaux Pd, Au, Ir, Pt et Rh, dont le pourcentage en poids dans la couche est compris entre 0,05% et 10%, de préférence 0.1 à 5%.

L'invention part d'un fait connu des spécialistes, suivant lequel les propriétés essentielles d'un empilement de couches minces contenant une couche métallique à propriétés dans l'infrarouge sont déterminées, entre autres, par la structure et la constitution de cette couche métallique, et que pour cela, la structure et la constitution de cette couche métallique, mais également la composition et la constitution de la couche en dessous et/ ou au-dessus de cette couche métallique sont fondamentalement importantes. On a montré que les métaux nobles cités ci-dessus exercent un effet particulièrement favorable sur la structure de la couche métallique à propriétés dans l'infrarouge déposée ensuite, et de manière plus ou moins indépendante, des matériaux qui composent la couche située en dessous de la couche métallique à propriétés dans l'infrarouge. De manière surprenante, cet effet favorable est observé même si les métaux nobles cités sont présents en une quantité relativement faible de, par exemple, seulement 0,05% en poids.

Concernant le mode d'action de ces métaux nobles en ces faibles quantités sur le phénomène de croissance de la couche métallique à propriétés dans l'infrarouge, il n'existe aucune explication définitive. L'effet favorable peut cependant reposer sur le fait qu'il se forme un germe métallique du métal noble, dans et sur une couche contenant un tel métal noble et que, à cause de l'isomorphie de ces métaux nobles par rapport au métal de la couche métallique à propriétés dans l'infrarouge, le métal de la couche métallique à propriétés dans l'infrarouge est condensé de préférence sur ces germes métalliques lors de la pulvérisation et croissent d'une manière particulièrement exempte de perturbations. Grâce à sa structure particulièrement régulière qui se forme, la couche métallique peut être pulvérisée avec une épaisseur relativement plus faible, à performances thermiques égales, ce qui est en faveur d'une transmission augmentée de la lumière. En particulier, l'amélioration essentielle surprenante de la dureté mécanique et l'augmentation de la stabilité chimique de l'empilement semblent être rattachées à la structure particulièrement exempte de perturbations de la couche métallique à propriétés dans l'infrarouge, qui résulte de la structure suivant l'invention de l'empilement de couches minces.

De manière préférée, la couche métallique à propriétés dans l'infrarouge est à base d'argent.

L'invention peut être par exemple, réalisée de manière qu'un ou plusieurs des métaux nobles cités sont introduits dans la couche fondamentale-antireflet, lorsque la couche métallique à propriétés dans l'infrarouge est déposée directement sur cette couche fondamentale antireflet. Dans ce cas, le métal noble est au mieux allié en la quantité souhaitée au métal de la cible, qui est pulvérisé de manière réactive pour faire couche antireflet diélectrique. Pendant l'oxydation de l'autre partie de métal lors de la pulvérisation réactive, le métal noble reste essentiellement métallique et forme les germes souhaités.

D'après une forme de réalisation préférée, on atteint par l'invention, une autre augmentation de l'effet favorable lorsque la couche placée directement en dessous et/ou au-dessus de la couche métallique à propriétés dans l'infrarouge est la couche protectrice à base d'un métal sacrificiel ou d'un métal sacrificiel partiellement ou complètement oxydé ou d'un alliage de métal sacrificiel. Les empilements de couches minces avec cette structure ont l'avantage qu'ils protègent en outre la couche métallique à propriétés dans l'infrarouge, grâce au métal sacrificiel, vis-à-vis de l'oxygène qui pénêtre par en dessous, de sorte que de tels empilements de couches minces conviennent également pour un traitement thermique ultérieur à haute température, du type bombage/trempe ou recuit.

Comme métaux pour les couches de métaux sacrificiels, conviennent les métaux cités ici, tels par exemple, Ni, Fe, Co, Ge, Pb, Cr, W, Bi, As, Sb, Be, Zn, Ti, Sn, Zr, V, Ta, Mn, Cu, Nb et Al ou des alliages de ces métaux.

Une autre amélioration des propriétés physiques et chimiques de l'empilement de couches minces est atteinte lorsque, dans une autre forme de l'invention, on mélange une faible quantité de 0,1 à 5%,en poids des métaux nobles Pd, Au, Ir, Pt et Rh à la couche placée directement en dessous de ladite couche métallique à propriétés dans l'infrarouge.

L'invention permet aussi la fabrication de vitrages à propriétés de réflexion dans l'infra-rouge et/ou à propriétés dans le domaine du rayonnement solaire avec un empilement de couches minces tel que celui décrit notamment dans la demande de brevet EP-0-611 215 qui comporte au moins une couche métallique à propriétés dans l'infra-rouge, notamment bas-émissive, disposée entre deux revêtements à base de matériau diélectrique et un revêtement sous-jacent à la couche à propriétés dans l'infra-rouge comportant au moins un revêtement de mouillage qui est adjacent à ladite couche et qui comprend une couche à base d'oxyde de tantale ou d'oxyde de niobium ou d'oxyde de zinc.

Chaque couche métallique à propriétés dans l'infrarouge de l'empilement peut être munie sur ses faces non pas d'une seule couche en matériau, mais d'un empilement de couches de matériau diélectrique. Ces matériaux peuvent notamment être constitués d'au moins un des composés suivants: Si₃N₄, ZnO, SnO₂, Ta₂O₅, Nb₂O₅, WO₃, TiO₂.

L'invention permet ainsi la fabrication de vitrages d'isolation thermique et/ou de protection solaire du type de celui décrit dans la demande de brevet EP--638 528 où le susbstrat comporte successivement:
- un premier revêtement en matériau diélectrique,
- une première couche à propriétés de réflexion dans l'infra-rouge, notamment à base de métal,
- un second revêtement en matériau diélectrique,
- une seconde couche à propriétés de réflexion dans l'infra-rouge, notamment à base de métal,
- un troisième revêtement en matériau diélectrique, l'épaisseur de la première couche à propriétés de réflexion dans l'infra-rouge correspondant à environ 50 à 80%, notamment 55 à 75%, et de préférence 60 à 65%, de celle de la seconde couche à propriétés de réflexion dans l'infra-rouge.

D'autres avantages et caractéristiques de l'invention résultent de la description suivante de plusieurs exemples de réalisation, où les propriétés atteintes par les empilements de couches minces d'après les exemples de réalisation sont comparées aux propriétés d'un empilement de couches minces préparé suivant un exemple comparatif. En outre, on montre que les empilements de couches minces suivant l'invention sont nettement supérieurs aux empilements de couches minces connus, concernant la stabilité chimique et leur dureté.

Pour évaluer la qualité des couches, on procède sur les échantillons aux mesures et essais suivants, dans la succession suivante:
a) Essais de lavage après emboutissage (ASTMD 2486) pour déterminer la dureté et respectivement, la résistance mécanique.
b) Mesure de la résistance des couches, réalisée d'après le procédé à 4 pointes au moyen d'un appareil de mesure de la résistance de la firme Veeco.
c) Mesure de l'émissivité au moyen d'un émissiomètre de la firme "Optical Sensors".
d) Essai de corrosion sous forme d'un essai instantanné à l'acide chlorhydrique. Ici, les échantillons sont immergés dans de l'acide chlorhydrique 0,01 N à une température de 38,5°C, pendant des périodes de longueurs différentes.
e) Mesure de l'émissivité. L'augmentation de l'émissivité par l'essai de corrosion est en outre, une mesure de la destruction de la couche.

### EXEMPLE COMPARATIF

On enduit des plaques en verre flotté ayant une épaisseur de 6 mm au moyen d'un dispositif de pulvérisation cathodique en continu assisté par champ magnétique, par l'empilement de couches minces suivant :

| | | |
|---|---|---|
| Couche fondamentale-antireflet | SnO₂ | 30 nm |
| Métal sacrificiel | NiCr | 2 nm |
| Argent | Ag | 12 nm |
| Métal sacrificiel | NiCr | 4 nm |
| Couche protectrice-antireflet | SnO₂ | 30 nm |

Les cibles de NiCr pour la préparation des couches de métal sacrificiel sont constituées de 80% en poids de Ni et de 20% en poids de Cr et ont un indice de pureté de 99,8%.

Les mesures et essais réalisés conduisent aux valeurs suivantes :

| | |
|---|---|
| Essai de lavage | après 350 coups de brosse sous eau, plusieurs égratignures petites et moyennes sont visibles, cependant sans éliminations de couche; |
| Résistance des couches | 8,5-9 ohms/unité de surface |
| Emissivité avant l'essai de corrosion | 9,0-10% |
| Emissivité après l'essai de corrosion | 25% |
| (Période d'immersion = 8 minutes). | |

### EXEMPLE DE REALISATION 1

On prépare des disques en verre flotté ayant une épaisseur de 6 mm au moyen du même dispositif que pour l'exemple comparatif et dans les mêmes conditions de procédure, avec un empilement de couches minces de même structure que celui de l'exemple comparatif, avec la seule modification que pour la préparation de la couche de métal sacrificiel en dessous de la couche en argent, on utilise une cible NiCr de la composition utilisée à l'exemple comparatif, qui est alliée à 0,2% en poids de Pd.

Les mesures et essais sur ces échantillons conduisent aux valeurs suivantes:

| | |
|---|---|
| Essai de lavage | après plus de 1000 coups de brosse sous eau, pas d'égratignure, pas d'élimination de couche; |
| Résistance des couches | 7,9-8,2 ohms/unité de surface |
| Emissivité avant l'essai de corrosion | 7-8% |
| Emissivité après l'essai de corrosion | 7-8% |
| (Période d'immersion = 150 minutes). | |

### EXEMPLE DE REALISATION 2

On prépare à nouveau des disques en verre flotté ayant une épaisseur de 6 mm au moyen du même dispositif que pour l'exemple comparatif et dans les mêmes conditions de procédure, avec un empilement de couches minces de même structure que celui de l'exemple comparatif, cependant avec la modification que la couche de métal sacrificiel entre la couche fondamentale-antireflet et la couche en argent présente une épaisseur de 1 nm et est pulvérisée à partir d'une cible de nickel pur, qui est alliée à 1% en poids de Pd.

Les mesures et essais sur ces échantillons conduisent aux valeurs suivantes :

| | |
|---|---|
| Essai de lavage | 1500 coups de brosse sous eau sans égratignure visible, ni d'élimination de couche; |
| Résistance des couches | 7,5-8 ohms/unité de surface |
| Emissivité avant l'essai de corrosion | 7% |
| Emissivité après l'essai de corrosion | 7% |
| (Période d'immersion = 150 minutes). | |

### EXEMPLE DE REALISATION 3

On munit à nouveau des plaques en verre flotté ayant une épaisseur de 6 mm au moyen du même dispositif que pour l'exemple comparatif et dans les mêmes conditions de procédure, d'un empilement de couches minces à cinq couches et de structure suivante :

| | | |
|---|---|---|
| Couche fondamentale-antireflet | SnO₂ | 30 nm |
| Métal sacrificiel | NiCr + 0,4% Pd | 2 nm |
| Argent | Ag | 12 nm |
| Métal sacrificiel | Ti + 1 % Pd | 4 nm |
| Couche protectrice-antireflet | SnO₂ | 30 nm |

Dans ce cas, la cible pour la couche de métal sacrificiel inférieure se compose également d'un alliage de Ni (80% en poids de Ni, 20% en poids de Cr), qui est allié à 0,4% en poids de Pd. La couche de métal sacrificiel supérieure est pulvérisée à partir d'une cible en titane, qui est alliée à 1% en poids de Pd.

Cet empilement de couches minces présente des propriétés encore améliorées concernant le comportement à la corrosion. Cet empilement de couches minces résiste à l'essai à l'acide d'après la norme DIN 50021 pendant une période de 24 heures, sans montrer de défaut essentiel des couches.

## Revendications

1. Substrat verrier, muni d'un empilement de couches minces comportant au moins une couche métallique à propriétés dans l'infrarouge, notamment bas-émissive, disposée entre deux revêtements comportant chacun au moins une couche anti-reflets à base de matériau diélectrique, et au moins une couche protectrice à base d'un métal sacrificiel ou d'un métal sacrificiel partiellement ou totalement oxydé ou d'un alliage de métal sacrificiel placée entre ladite couche métallique et un desdits revêtements, **caractérisé en ce que** la couche placée directement en dessous de ladite couche métallique contient au moins l'un des métaux nobles Pd, Au, Ir, Pt et Rh, dont le pourcentage en poids dans la couche est compris entre 0,05 % et 10 %, de préférence 0,1 à 5 %.

2. Substrat selon la revendication 1, **caractérisé en ce que** ladite couche placée directement en dessous de ladite couche métallique à propriétés dans l'infra-rouge est une couche anti-reflets à base de matériau diélectrique.

3. Substrat selon la revendication 1, **caractérisé en ce que** ladite couche placée directement en dessous de ladite couche métallique à propriétés dans l'infrarouge est ladite couche protectrice à base d'un métal sacrificiel ou d'un métal sacrificiel partiellement ou complètement oxydé ou d'un alliage de métal sacrificiel.

4. Substrat selon l'une quelconque des revendications précédentes, **caractérisé en ce que** la couche placée directement au dessus de ladite couche métallique à propriétés dans l'infrarouge contient au moins l'un des métaux nobles Pd, Au, Ir, Pt et Rh.

5. Substrat selon l'une quelconque des revendications précédentes, **caractérisé en ce que** la couche métallique à propriétés dans l'infrarouge est à base d'argent.

6. Substrat selon l'une quelconque des revendications 1 à 5, **caractérisé en ce que** la couche placée au-dessus et/ou en dessous de la couche métallique à propriétés dans l'infrarouge comporte un ou plusieurs des métaux Ni, Fe,Co,Ge, Pb, Cr, W, Bi, As, Sb Be, Zn, Ti, Sn, Zr, V, Ta, Mn, Cu, Nb et AI.

7. Substrat selon l'une quelconque des revendications précédentes, **caractérisé en ce que** la couche placée au dessus et/ou en dessous de la couche métalllique à propriétés dans l'infrarouge contient du Ni ou du Cr.

8. Substrat selon la revendication 6 ou 7, **caractérisé en ce que** la couche placée au-dessus et/ou en dessous de la couche métallique à propriétés dans l'infrarouge comporte de 70 à 90% en poids de Ni, de 5 à 25% en poids de Cr et 0,05 à 5% en poids d'au moins l'un des métaux nobles Pd, Au, Ir, Pt et Rh.

9. Substrat selon l'une quelconque des revendications 1 à 7, **caractérisé en ce que** la couche placée directement en dessous de la couche métallique à propriétés dans l'infrarouge présente une épaisseur de 0,5 à 2 nm.

10. Substrat selon l'une quelconque des revendications 1 à 8, **caractérisé en ce que** la couche placée directement au-dessus de la couche métallique à propriétés dans l'infrarouge présente une épaisseur de 1 à 10 nm, et de préférence, de 1 à 5 nm.

11. Substrat selon l'une quelconque des revendications 1 à 9, **caractérisé en ce qu'**il présente deux ou trois couches métalliques à propriétés dans l'infrarouge , où au moins une des couches placées directement en dessous des couches métalliques à propriétés dans l'infrarouge comporte au moins un métal noble.

12. Substrat selon l'une quelconque des revendications précédentes, **caractérisé en ce que** toutes les couches minces de l'empilement sont obtenues à partir d'une technique de dépôt sous vide, du type pulvérisation cathodique.

13. Application du substrat selon l'une des revendications précédentes, à un vitrage monolithique, feuilleté ou multiple bas-émissif présentant une transmission élevée dans le domaine spectral visible.

## Claims

1. Glass substrate, provided with a stack of films including at least one metal film having properties in the infrared, particularly of the low-emissive nature, placed between two layers, each incorporating at least one anti-reflection film based on dielectric material and at least one protective film based on a sacrificial metal or a partly or totally oxidized sacrificial metal or a sacrificial metal alloy placed between said metal film and said layers, characterized in that the film placed directly below said metal film contains at least one of the noble metals Pd, Au, Ir, Pt and Rh, whose weight percentage in the film is between 0.05 and 10%, preferably between 0.1 and 5%.

2. Substrate according to claim 1, characterized in that the film placed directly below said metal film and having properties in the infrared is an anti-reflection film based on dielectric material.

3. Substrate according to claim 1, characterized in that the film placed directly below the metal film having properties in the infrared is the said protective film based on a sacrificial metal or a partly or completely oxidized sacrificial metal or a sacrificial metal alloy.

4. Substrate according to any one of the preceding claims, characterized in that the film placed directly above said metal film having properties in the infrared contains at least one of the noble metals Pd, Au, Ir, Pt and Rh.

5. Substrate according to any one of the preceding claims, characterized in that the metal film having properties in the infrared is based on silver.

6. Substrate according to any one of the claims 1 to 5, characterized in that the film placed above and/or below the metal film having properties in the infrared incorporates one or more of the metals Ni, Fe, Co, Ge, Pb, Cr, W, Bi, As, Sb, Be, Zn, Ti, Sn, Zr, V, Ta, Mn, Cu, Nb and Al.

7. Substrate according to any one of the preceding claims, characterized in that the film placed above and/or below the metal film having properties in the infrared contains Ni or Cr.

8. Substrate according to claim 6 or 7, characterized in that the film placed above and/or below the metal film having properties in the infrared contains 70 to 90 wt.% Ni, 5 to 25 wt.% Cr and 0.05 to 5 wt.% of at least one of the noble metals Pd, Au, Ir, Pt and Rh.

9. Substrate according to any one of the claims 1 to 7, characterized in that the film placed directly below the metal film having properties in the infrared has a thickness of 0.5 to 2 nm.

10. Substrate according to any one of the claims 1 to 8, characterized in that the film placed directly above the metal film having properties in the infrared has a thickness of 1 to 10 nm and preferably 1 to 5 nm.

11. Substrate according to any one of the claims 1 to 9, characterized in that it has two or three metal films with properties in the infrared, where at least one of the films placed directly below the metal films having properties in the infrared incorporates at least one noble metal.

12. Substrate according to any one of the preceding claims, characterized in that all the films of the stack are obtained on the basis of a vacuum deposition method of the cathodic sputtering type.

13. Application of the substrate according to any one of the preceding claims to a low-emissive, monolithic, laminated or multiple glazing having a high transmission in the visible spectral range.

## Patentansprüche

1. Glassubstrat mit einer Folge von dünnen Schichten, welche wenigstens eine metallische, insbesondere niederemissive Schicht mit Eigenschaften im Infrarotbereich umfaßt, welche Schicht zwischen zwei Decksystemen angeordnet ist, deren jedes mindestens eine Entspiegelungsschicht auf Basis eines Dielektrikums und mindestens eine Schutzschicht auf Basis eines Opfermetalls, eines teilweise oder vollständig oxidierten Opfermetalls oder einer Opfermetall-Legierung umfaßt, welche Schutzschicht zwischen der besagten metallischen Schicht und einem der besagten Decksysteme angeordnet ist, **dadurch gekennzeichnet,** daß die unmittelbar unter der besagten metallischen Schicht angeordnete Schicht wenigstens eines der Edelmetalle Pd, Au, Ir, Pt und Rh enthält. dessen Gewichtsanteil zwischen 0,05 bis 10 Gew.-%, vorzugsweise zwischen 0,1 bis 5 Gew.-% liegt.

2. Substrat nach Anspruch 1, **dadurch gekennzeichnet,** daß die unmittelbar unter der metallischen Schicht mit Eigenschaften im Infrarotbereich angeordnete Schicht eine Entspiegelungsschicht auf Basis eines Dielektrikums ist.

3. Substrat nach Anspruch 1, **dadurch gekennzeichnet,** daß die unmittelbar unter der metallischen Schicht mit Eigenschaften im Infrarotbereich angeordnete Schicht die besagte Schutzschicht auf Basis eines Opfermetalls, eines teilweise oder vollständig oxidierten Opfermetalls oder einer Opfermetall-Legierung ist.

4. Substrat nach einem der vorstehenden Ansprüche, **dadurch gekennzeichnet,** daß die unmittelbar über der metallischen Schicht mit Eigenschaften im Infrarotbereich angeordnete Schicht mindestens eines der Edelmetalle Pd, Au, Ir, Pt und Rh enthält.

5. Substrat nach einem der vorstehenden Ansprüche, **dadurch gekennzeichnet,** daß die metallische Schicht mit Eigenschaften im Infrarotbereich auf Silberbasis hergestellt ist.

6. Substrat nach einem der Ansprüche 1 bis 5, **dadurch gekennzeichnet**, daß die oberhalb und/oder unterhalb der metallischen Schicht mit Eigenschaften im Infrarotbereich angeordnete Schicht eines oder mehrere der Metalle Ni, Fe, Co, Ge, Pb, Cr, W, Bi, As, Sb, Be, Zn, Ti, Sn, Zr, V, Ta, Mn, Cu, Nb und Al enthält.

7. Substrat nach einem der vorstehenden Ansprüche, **dadurch gekennzeichnet,** daß die oberhalb und/oder unterhalb der metallischen Schicht mit Eigenschaften im Infrarotbereich angeordnete Schicht Ni oder Cr enthält.

8. Substrat nach Anspruch 6 oder 7, **dadurch gekennzeichnet,** daß die oberhalb und/ oder unterhalb der metallischen Schicht mit Eigenschaften im Infrarotbereich angeordnete Schicht aus 70 bis 90 Gew.-% Ni, 5 bis 25 Gew.-% Cr und 0,05 bis 5 Gew.-% wenigstens eines der Edelmetalle Pd, Au, Ir, Pt und Rh enthalten.

9. Substrat nach einem der Ansprüche 1 bis 7, **dadurch gekennzeichnet,** daß die unmittelbar unterhalb der metallischen Schicht mit Eigenschaften im Infrarotbereich angeordnete Schicht eine Dicke von 0,5 bis 2 nm aufweist.

10. Substrat nach einem der Ansprüche 1 bis 8, **dadurch gekennzeichnet,** daß die unmittelbar oberhalb der Schicht mit Eigenschaften im Infrarotbereich angeordnete Schicht eine Dicke von 1 bis 10 nm, und vorzugsweise von 1 bis 5 nm aufweist.

11. Substrat nach einem der Ansprüche 1 bis 9, **dadurch gekennzeichnet,** daß es zwei oder drei metallische Schichten mit Eigenschaften im Infrarotbereich aufweist, wobei mindestens eine der unmittelbar unterhalb der metallischen Schichten mit Eigenschaften im Infrarotbereich angeordnete Schicht mindestens ein Edelmetall enthält.

12. Substrat nach einem der vorstehenden Ansprüche, **dadurch gekennzeichnet,** daß sämtliche dünnen Schichten der Folge mittels einer Vakuum-Beschichtungstechnik des Typs Kathodenzerstäubung hergestellt sind.

13. Anwendung des Substrats nach einem der vorstehenden Ansprüche bei einer niederemissiven monolithischen Glasscheibe, einer Verbundglasscheibe oder Mehrfachglasscheibe mit erhöhter Transmission im sichtbaren Spektralbereich.
